# EUROPÄISCHE PATENTSCHRIFT

(11) **EP 0 355 567 B1**
(45) Veröffentlichungstag und Bekanntmachung des Hinweises auf die Patenterteilung: **04.01.1995**
(21) Anmeldenummer: 89114619.3
(22) Anmeldetag: 08.08.1989
(51) Int. Cl.: G04G 5/00

(54) **Einrichtung sowie Verfahren zur Korrektur von Datum und Uhrzeit**
Date and time correcting device and method therefor
Dispositif ainsi que procédé de correction de la date et de l'heure

(30) Priorität: 17.08.1988 DE 3827837
(43) Veröffentlichungstag der Anmeldung: 28.02.1990
(73) Patentinhaber: Deutsche Thomson-Brandt GmbH, 78010 Villingen-Schwenningen (DE)
(72) Erfinder: Fechner, Rainer, D-7730 VS-Villingen (DE); Békési, Thomas, D-7732 Niedereschach (DE)

(56) Entgegenhaltungen:
- EP-A- 0 042 913
- EP-A- 0 112 589
- EP-A- 0 180 155
- EP-A- 0 180 160
- DE-A- 2 708 885
- GB-A- 1 545 765
- US-A- 4 087 958
- PATENT ABSTRACTS OF JAPAN, Band 012-226 (P-722), 28. Juni 1988;& JP-A-63 019 584
- ELECTRONIC COMPONENTS & APPLICATIONS, Band 8, Nr.1, 1987, Seiten 39-44, Eindhoven, NL; A. LENTZER et al.: "Integrated videoprogramming system (VPS) decoder"

## Beschreibung

Die Erfindung geht aus von einer Einrichtung gemäß dem Oberbegriff des Anspruchs 1. Eine derartige Einrichtung ist bekannt durch die EP-A2-0 180 155.
Es ist bekannt, Uhren mittels einer Zentraluhr oder durch die von einem Sender ausgestrahlten Angaben für die Uhrzeit zu steuern. So kann z.B. durch die von einem Zeitnormalsender DCF 77 empfangenen Signale eine ständige Synchronisierung einer Uhr durchgeführt werden. Es ist auch in einem Informationsblatt der Firma Thomson Thomson Infrarot-VPV-System" vorgeschlagen worden, bei erstmaligem Programmieren eines Videorecorders Datum und Uhrzeit aus den empfangenen Videotextdaten, ausgelöst durch einen Befehl, zu übernehmen. Dadurch wird zwar die genaue Uhrzeit und das Datum eingestellt, eine dauernde Korrektur aber nicht durchgeführt.

Es ist Aufgabe der Erfindung, bei Vorliegen von Videotextdaten eine ständige Synchronisation zwischen den von einem Uhrenbaustein abgegebenen Daten und den in den Videotextdaten empfangenen Daten für Datum und Uhrzeit durchzuführen.

Diese Aufgabe wird gemäß der Erfindung durch die im Anspruch 1 aufgeführten Merkmale gelöst. Weiterbildungen der Erfindung sind in den Unteransprüchen gekennzeichnet.

Bei Vorliegen von Videotextdaten werden neben den Videotextinformationen Angaben für Uhrzeit und Datum übertragen. In Geräten der Unterhaltungselektronik, die mit einem Videotextdecoder ausgerüstet sind, können diese Angaben erfindungsgemäß für eine ständige Synchronisierung eines Uhrenbausteins ohne großen technischen Aufwand verwendet werden. Liegen diese Angaben nicht vor, d.h. in Zeiten, in denen kein Videotextsignal ausgesendet wird, oder das Videotextsignal gestört ist, wird das abgegebene Signal des Uhrenbausteins für die Anzeige verwendet, welches je nach Ganggenauigkeit geringfügig von der tatsächlichen Zeit abweichen kann. Vorteilhaft wirkt sich die Erfindung auch bei der Umstellung von Sommer- auf Winterzeit oder umgekehrt aus, da sofort bei Empfang eines Videotextsignales diese Umstellung automatisch erfolgt.

Die Videotextdaten werden im ASCI-Code übertragen, während die von einem elektronischen Uhrenbaustein abgegebenen Daten für eine Anzeige in einem Display allgemein als binäre Daten generiert und in einer Decodierschaltung für die Anzeige aufbereitet werden. Durch einen Vergleich der empfangenen mit den im Uhrenbaustein generierten Daten in einer Vergleichslogikschaltung wird bei Abweichen der Daten voneinander von der Vergleichslogikschaltung ein Signal ausgegeben, durch welches in den Uhrenbaustein die in Binärcode umgewandelten Daten des Videotextes transferiert werden. Mit diesen Daten wird der Uhrenbaustein neu gestellt und gestartet. Bei größeren Abweichungen durch Fehler in der Ganggenauigkeit der im Uhrenbaustein generierten Daten kann sich dieser Vorgang in bestimmten Zeitabständen wiederholen, wobei die Zeitintervalle für eine Nachstellung durch Auslegung der Schaltung so gering wie möglich gehalten werden, damit bei der Anzeige möglichst keine Sprünge erkennbar sind.

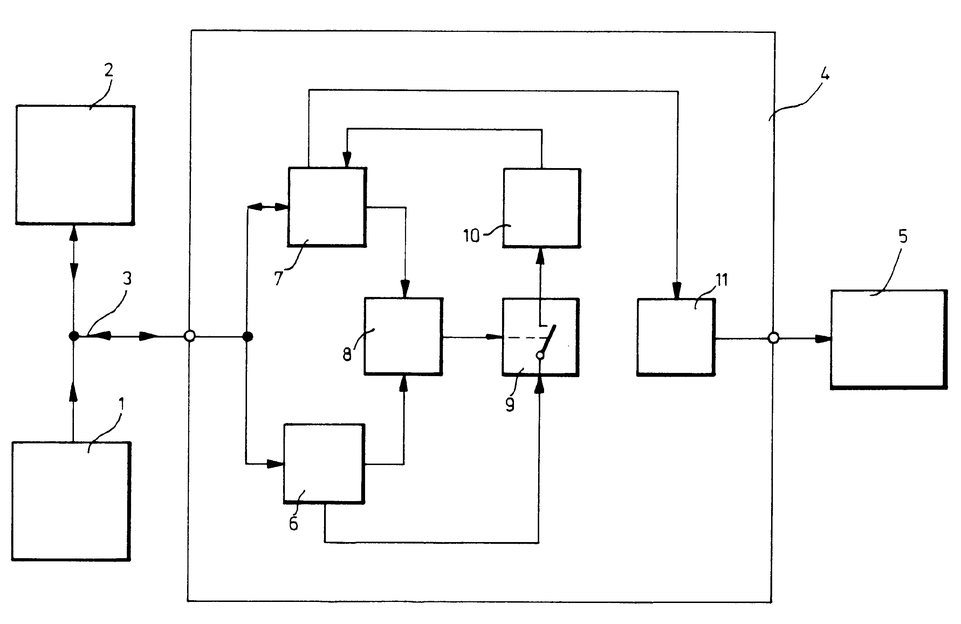

Im folgenden soll die Erfindung anhand einer Figur beispielhaft näher erläutert werden.
Die Figur zeigt in einem Blockschaltbild einen Videotextdecoderbaustein 1 und einen Uhrenbaustein 2. Beide Bausteine sind über einen Datenbus 3, der als I²C-Bus ausgeführt ist, mit einer Decodierungs- und Vergleichslogikschaltung 4 verbunden, von der Signale für eine Anzeige von Datum und Uhrzeit an ein Display 5 ausgegeben werden. Die vom Uhrenbaustein 2 generierten Signale werden als binärcodierte Signale in das Uhrenregister 7 und die vom Videotextbaustein 1 empfangenen Daten für Uhrzeit und Datum als ASCI-Signale in das VT-Datenregister 6 über den gemeinsamen I²C-Bus 3 eingegeben. Die Ausgänge der Datenregister 6,7 sind mit einer Vergleichslogikschaltung 8 verbunden. In dieser Schaltung wird geprüft, ob ein Videotextsignal vorliegt und wenn ja, ob die empfangenen Daten für Uhrzeit und Datum verwertbar sind. Sind diese Kriterien nicht erfüllt, werden weiterhin die vom Uhrenbaustein 2 generierten Daten an das Display 5 über eine Datenumwandlungsschaltung 11 ausgegeben. Liegen Daten vom Videotextsignal vor und sind diese mit den vom Uhrenbaustein 2 gleich, werden ebenfalls die vom Uhrenbaustein 2 generierten Daten an das Display 5 ausgegeben. Erst bei Abweichen der Daten voneinander wird der Vergleichslogikschaltung 8 ein Signal zur Betätigung eines Schalters 9 ausgegeben, wodurch die im Register 6 befindlichen in Asci-Code vorliegenden Videotextdaten über eine Datenmwandlungsschaltung 10, in welcher der ASCI-Code in einen Binärcode umgewandelt wird, dem Uhrenregister 7 zugeführt. Von diesem werden diese Daten über den I²C-Bus 3 in den Uhrenbaustein 2 transferiert. Dieser wird durch die Daten gestellt und neu gestartet, so daß anschließend an diesen Vorgang die korrigierten Daten sowohl für die Anzeige 5 als auch in der Vergleichslogikschaltung 8 vorliegen, so daß Schalter 9 wieder geöffnet wird. Der beschriebene Vorgang wiederholt sich bei abweichenden Daten in bestimmten Abständen, wobei durch die Auslegung der Schaltung dieser Nachstellvorgang für einen Beobachter der Anzeige unmerklich vollzogen wird.

In einer ausgeführten Schaltung wurden für die Decodierung- und Vergleichslogikschaltung 4 ein Mikroprozessor HMSCS 400 von der Firma Hitachi, für den Videotextdecoderbaustein 1 Schaltkreise SAA 5231 und SAA 5243 der Firma Valvo, und für den Uhrenbaustein 2, ein Schaltkreis PCF 8583 von der Firma Valvo eingesetzt.

Eine weitere Schaltungsvariante ist möglich, wenn auch der Uhrenbaustein 2 in die Schaltung 4 als Software-Uhr integriert wird. Eine derartige Lösung bietet den Vorteil, daß die Daten nicht vom Uhrenbaustein eingelesen werden müssen, sondern bereits im Uhrenregister 7 anstehen. Diese Lösung kann mit einem Mikroprozessor HD 404709 realisiert werden.

## Patentansprüche

1. Einrichtung zur Korrektur der Uhrzeit eines Signale für eine Anzeigeeinrichtung (5) zum Anzeigen der Uhrzeit erzeugenden Uhrenbausteines (2) mittels aus einem Funksignal empfangener erster Daten für die Uhrzeit, wobei ein Vergleich der ersten Daten mit über den Uhrenbaustein (2) generierten zweiten Daten für die Uhrzeit in einer Vergleichsschaltung durchgeführt und bei Abweichung der beiden Uhrzeiten voneinander von der Vergleichsschaltung ein Steuersignal erzeugt wird, welches eine Korrektur auslöst, **dadurch gekennzeichnet**,
daß diese Einrichtung zum Verarbeiten von als Videotextsignale übertragenen Funksignalen geeignet ist,
daß - bei Vorliegen von in dem Funksignal enthaltenen Videotextsignalen - ein ständiger Vergleich von in den Videotextsignalen enthaltenen ersten Daten für Datum und Uhrzeit mit den vom Uhrenbaustein (2) generierten zweiten Daten in einer als Vergleichslogikschaltung (8) aufgebauten Vergleichsschaltung durchgeführt wird, und
daß bei Abweichung der ersten und zweiten Daten voneinander von der Vergleichslogikschaltung (8) ein Steuersignal erzeugt wird, welches eine Korrektur der vom Uhrenbaustein (2) abgegebenen zweiten Daten für Datum und Uhrzeit durch die in den Videotextdaten enthaltenen ersten Daten für Datum und Uhrzeit auslöst,
daß hierfür über einen gemeinsamen Datenbus (I²C-Bus 3) die ersten Daten für Datum und Uhrzeit von einem Videotextdecoderbaustein (1) in ein erstes Datenregister (6) und die von dem Uhrenbaustein (2) generierten zweiten Daten für Datum und Uhrzeit in ein zweites Datenregister (7) eingelesen werden,
daß die Ausgänge der Datenregister (6, 7) mit der Vergleichslogikschaltung (8) verbunden sind, und
daß bei Abweichen der genannten Daten voneinander, von der Vergleichslogikschaltung (8) ein Signal zur Betätigung eines Schalters (9) ausgegeben wird, über den die Daten aus dem ersten Datenregister (6) nach einer Umwandlung in einer Datenumwandlunssschaltung (10) dem zweiten Datenregister (7) zugeführt werden, wodurch über den Datenbus (I²C-Bus 3) eine Nachstellung des Uhrenbausteins (2) auf die Daten nach dem ersten Datenregister (6) ausgelöst wird.

2. Einrichtung nach Anspruch 1, **dadurch gekennzeichnet**, daß bei nicht empfangenen Videotextsignalen oder bei unvollständig empfangenen Videotextsignalen die von dem Uhrenbaustein (2) generierten zweiten Daten für Datum und Uhrzeit der Anzeigeeinrichtung (5) zugeführt werden.

3. Einrichtung nach Anspruch 1, **dadurch gekennzeichnet**, daß die Korrektur von Datum und Uhrzeit wahlweise, automatisch, oder durch Betätigen einer Taste erfolgt.

4. Einrichtung nach Anspruch 1, **dadurch gekennzeichnet**, daß - bei Vorliegen mehrsprachiger Daten mit unterschiedlichen Uhrzeiten in den empfangenen Videotextsignalen - eine Selektionsmöglichkeit für die Auswahl einer Uhrzeit vorgesehen ist.

5. Schaltung nach einem der vorangehenden Ansprüche, **dadurch gekennzeichnet**, daß die Datenregister (6, 7), die Vergleichslogikschaltung (8), der Schalter (9) und die Datenumwandlungsschaltung (10) in einer integrierten Schaltung (4) enthalten sind.

6. Verfahren zur Korrektur der Uhrzeit eines Signale für eine Anzeigeeinrichtung (5) zum Anzeigen der Uhrzeit erzeugenden Uhrenbausteines (2) mittels aus einem Funksignal empfangener erster Daten für die Uhrzeit, wobei ein Vergleich der ersten Daten mit über den Uhrenbaustein (2)generierten zweiten Daten für die Uhrzeit in einer Vergleichsschaltung durchgeführt und bei Abweichung der beiden Uhrzeiten voneinander von der Vergleichsschaltung ein Steuersignal erzeugt wird, welches eine Korrektur auslöst, **dadurch gekennzeichnet,**
daß dieses Verfahren zum Verarbeiten von als Videotextsignale übertragenen Funksignalen geeignet ist,
daß - bei Vorliegen von in dem Funksignal enthaltenen Videotextsignalen - ein ständiger Vergleich von in den Videotextsignalen enthaltenen ersten Daten für Datum und Uhrzeit mit den vom Uhrenbaustein (2) generierten zweiten Daten für Datum und Uhrzeit in einer als Vergleichslogikschaltung (8) aufgebauten Vergleichsschaltung durchgeführt wird, und
daß bei Abweichung der ersten und zweiten Daten voneinander von der Vergleichslogikschaltung (8) ein Steuersignal erzeugt wird, welches eine Korrektur der vom Uhrenbaustein (2) abgegebenen zweiten Daten für Datum und Uhrzeit durch die in den Videotextsignalen enthaltenen ersten Daten für Datum und Uhrzeit auslöst,
daß hierfür über einen gemeinsamen Datenbus (I²C-Bus 3) die ersten Daten für Datum und Uhrzeit von einem Videotextdecoderbaustein (1) in ein erstes Datenregister (6) und die von dem Uhrenbaustein (2) generierten zweiten Daten für Datum und Uhrzeit in ein zweites Datenregister (7) eingelesen werden,
daß Ausgänge der Datenregister (6, 7) mit der Vergleichslogikschaltung (8) verbunden sind, und
daß bei Abweichen der genannten Daten voneinander, von der Vergleichslogikschaltung (8) ein Signal zur Betätigung eines Schalters (9) ausgegeben wird, über den die Daten aus dem ersten Datenregister (6) nach einer Umwandlung in einer Datenumwandlungsschaltung (10) dem zweiten Datenregister (7) zugeführt werden, wodurch über den Datenbus (I²C-Bus 3) eine Nachstellung des Uhrenbausteins (2) auf die Daten nach dem ersten Datenregister (6) ausgelöst wird.

## Claims

1. Device for correcting the time of a clock module (2), which generates signals for a display device (5) for displaying the time, by means of first items of data for the time which are received from a radio signal, wherein a comparison of the first items of data with second items of data for the time, which are generated by the clock module (2), is carried out in a comparator circuit and, when there is a deviation of the two clock times from each other, a control signal, which triggers-off a correction process, is generated by the comparator circuit, characterised in that,
this device is suitable for processing radio signals transmitted as video text signals,
that - when video text signals contained in the radio signal are present - a continuous comparison of first items of data for the date and the time, which are contained in the video text signals, with the second items of data, which are generated in the clock module (2), is carried out in a comparator circuit which is constructed as a logical comparison circuit (8) and that, when there is a deviation of the first and second items of data from each other, a control signal, which triggers-off a correction of the second items of data for the date and the time which are emitted by the clock module (2) by the first items of data for the date and the time which are contained in the items of video text data, is generated by the logical comparison circuit (8),
that for effecting this, the first items of data for the date and the time are read into a first data register (6) over a common data bus (I²C Bus 3) from a video text decoder module (1) and the second items of data for the date and the time generated by the clock module (2) are read into a second data register (7),
that the outputs of the data registers (6, 7) are connected to the logical comparison circuit (8) and
that, when there is a deviation of the said items of data from each other, a signal is emitted by the logical comparison circuit (8) for actuating a switch (9) via which the items of data from the first data register (6) are supplied to the second data register (7) after a conversion in a data conversion circuit (10) whereby an adjustment of the clock module (2) to the items of data in accordance with the first data register (6) is initiated over the data bus (I²C Bus 3).

2. Device in accordance with Claim 1, characterised in that, when video text signals are not being received or if the received video text signals are incomplete, the second items of data for the date and the time, which are generated by the clock module (2), are supplied to the display device (5).

3. Device in accordance with Claim 1, characterised in that, the correction of the date and time is effected selectively, either automatically or by actuation of a key.

4. Device in accordance with Claim 1, characterised in that, when multi-lingual items of data having different clock times are present in the received video text signals, selection means are provided for selecting one clock time.

5. Circuit in accordance with any of the preceding Claims, characterised in that, the data registers (6, 7), the logical comparison circuit (8), the switch (9) and the data converting circuit (10) are comprised in an integrated circuit (4).

6. Method for correcting the time of a clock module (2), which generates signals for a display device (5) for displaying the time, by means of first items of data for the time which are received from a radio signal, wherein a comparison of the first items of data with second items of data for the time, which are generated by the clock module (2), is carried out in a comparator circuit and, when there is a deviation of the two clock times from each other, a control signal, which triggers-off a correction process, is generated by the comparator circuit, characterised in that,
this method is suitable for processing radio signals transmitted as video text signals,
that - when video text signals contained in the radio signal are present - a continuous comparison of first items of data for the date and the time, which are contained in the video text signals, with the second items of data, which are generated in the clock module (2), is carried out in a comparator circuit which is constructed as a logical comparison circuit (8) and that, when there is a deviation of the first and second items of data from each other, a control signal, which triggers-off a correction of the second items of data for the date and the time which are emitted by the clock module (2) by the first items of data for the date and the time which are contained in the video text signals, is generated by the logical comparison circuit (8),
that for effecting this, the first items of data for the date and the time are read into a first data register (6) over a common data bus (I²C Bus 3) from a video text decoder module (1) and the second items of data for the date and the time generated by the clock module (2) are read into a second data register (7),
that the outputs of the data registers (6, 7) are connected to the logical comparison circuit (8) and
that, when there is a deviation of the said items of data from each other, a signal is emitted by the logical comparison circuit (8) for actuating a switch (9) via which the items of data from the first data register (6) are supplied to the second data register (7) after a conversion in a data conversion circuit (10) whereby an adjustment of the clock module (2) to the items of data in accordance with the first data register (6) is initiated over the data bus (I²C Bus 3).

## Revendications

1. Dispositif pour la correction de l'heure d'un module d'horloge qui génère des signaux pour un dispositif d'affichage (5) pour l'affichage de l'heure au moyen d'un signal radio de premières données reçues pour l'heure, une comparaison des premières données et des secondes données pour l'heure générées par le module d'horloge (2) étant effectuée dans un circuit de comparaison et un signal de commande étant généré par le circuit de comparaison lors de la divergence des deux heures l'une de l'autre, signal qui déclenche une correction, **caractérisé en ce** que ce dispositif est approprié pour traiter des signaux radio transmis comme signaux de télétexte,
que - lors de la présence de signaux de télétexte contenus dans le signal radio - une comparaison continue de premières données pour la date et l'heure contenues dans les signaux de télétexte est effectuée avec les secondes données générées par le module d'horloge (2) dans un circuit de comparaison constitué comme circuit logique de comparaison (8) et
qu'un signal de commande est généré par le circuit logique de comparaison (8), lors de la divergence des premières et des secondes données les unes des autres, signal qui déclenche une correction des secondes données pour la date et l'heure fournies par le module d'horloge (2) par les premières données pour la date et l'heure contenues dans les données de télétexte,
que pour cela les premières données pour la date et l'heure sont mises en mémoire par un bus de données commun (bus I²C 3) par un module de décodage de télétexte (1) dans un premier registre de données (6) et les secondes données pour la date et l'heure, générées par le module d'horloge (2), sont mises en mémoire par un bus de données commun (bus I²C 3) dans un second registre de données (7),
que les sorties des registres de données (6, 7) sont reliées au circuit logique de comparaison (8) et
que, lorsque les données citées différent les unes des autres, un signal est donné par le circuit logique de comparaison (8) pour actionner un commutateur (9) par lequel les données provenant du premier registre de données (6) sont amenées, après conversion dans un circuit de conversion de données (10), au second registre de données (7), ce par quoi un rajustage du module d'horloge (2) sur les données selon le premier registre de données (6) est déclenché par le bus de données (bus I²C 3).

2. Dispositif selon la revendication 1, **caractérisé en ce** que, lorsque les signaux de télétexte ne sont pas reçus ou lorsque les signaux de télétexte sont reçus de manière incomplète, les secondes données pour la date et l'heure générées par le module d'horloge (2) sont amenées au dispositif d'affichage (5).

3. Dispositif selon la revendication 1, **caractérisé en ce** que la correction de la date et de l'heure est effectuée au choix automatiquement ou en actionnant une touche.

4. Dispositif selon la revendication 1, **caractérisé en ce** qu'en présence de données en plusieurs langues avec des heures différentes dans les signaux de télétexte reçus une possibilité de sélection est prévue pour le choix d'une heure.

5. Circuit selon l'une des revendications précédentes, **caractérisé en ce** que les registres de données (6, 7), le circuit logique de comparaison (8), le commutateur (9) et le circuit de conversion de données (10) sont contenus dans un circuit intégré (4).

6. Procédé pour la correction de l'heure d'un module d'horloge (2) qui génère des signaux pour un dispositif d'affichage (5) pour l'affichage de l'heure au moyen d'un signal radio de premières données reçues pour l'heure, une comparaison des premières données et des secondes données pour l'heure générées par le module d'horloge (2) étant effectuée dans un circuit de comparaison et un signal de commande étant généré par le circuit de comparaison lors de la divergence des deux heures l'une de l'autre, signal qui déclenche une correction, **caractérisé en ce** que ce procédé convient pour traiter des signaux radio transmis comme signaux de télétexte,
que, lorsque l'on est en présence de signaux de télétexte contenus dans le signal radio, une comparaison continue des premières données pour la date et l'heure contenues dans les signaux de télétexte est effectuée avec les secondes données pour la date et l'heure générées par le module d'horloge (2) dans un circuit de comparaison constitué comme circuit logique de comparaison (8) et
qu'un signal de commande est généré par le circuit logique de comparaison (8), lors de la divergence des premières et des secondes données les unes des autres, signal qui déclenche une correction des secondes données pour la date et l'heure fournies par le module d'horloge (2) par les premières données pour la date et l'heure contenues dans les données de télétexte,
que pour cela les premières données pour la date et l'heure sont mises en mémoire par un bus de données commun (bus I²C 3) par un module de décodage de télétexte (1) dans un premier registre de données (6) et les secondes données pour la date et l'heure, générées par le module d'horloge (2), sont mises en mémoire par un bus de données commun (bus I²C 3) dans un second registre de données (7),
que les sorties des registres de données (6, 7) sont reliées au circuit logique de comparaison (8) et
que, lorsque les données citées différent les unes des autres, un signal est donné par le circuit logique de comparaison (8) pour actionner un commutateur (9) par lequel les données provenant du premier registre de données (6) sont amenées, après conversion dans un circuit de conversion de données (10), au second registre de données (7), ce par quoi un rajustage du module (2) sur les données selon le premier registre de données (6) est déclenché par le bus de données (bus I²C 3).
